# EUROPÄISCHE PATENTSCHRIFT

(11) **EP 1 870 516 B1**
(45) Veröffentlichungstag und Bekanntmachung des Hinweises auf die Patenterteilung: **29.08.2012**
(21) Anmeldenummer: 07101640.6
(22) Anmeldetag: 02.02.2007
(51) Int. Cl.: D21G 1/00, D21G 1/02

(54) **Walze**
Roll
Rouleau

(30) Priorität: 22.06.2006 DE 102006028588
(43) Veröffentlichungstag der Anmeldung: 26.12.2007
(73) Patentinhaber: Voith Patent GmbH, 89522 Heidenheim (DE)
(72) Erfinder: Conrad, Hans-Rolf, 41539 Dormagen (DE)

(56) Entgegenhaltungen:
- WO-A-02/064886
- DE-B3- 10 358 292
- DE-U1- 9 301 059

## Beschreibung

Die Erfindung betrifft eine Walze, insbesondere Bahnbehandlungs-, Leit-, Kontakt- oder Stützwalze, mit einem im Betrieb rotierenden Korpus, der mindestens einen Hohlraum aufweist, der zumindest teilweise mit einer Mischung aus einer Flüssigkeit und mindestens einem in der Flüssigkeit nicht lösbaren Mischungspartner gefüllt ist, der durch Feststoffpartikel oder ein flüssiges Fluid oder durch Feststoffpartikel und mindestens ein flüssiges Fluid gebildet ist.

Eine derartige Walze ist aus DE 103 58 292 B3 bekannt. Die Mischung aus der Flüssigkeit und dem Mischungspartner wird im Betrieb gemeinsam mit der Walze bewegt. Wenn die Walze einer Schwingung ausgesetzt ist, dann überträgt sich diese Schwingung auf die Flüssigkeit, die ihrerseits den Mischungspartner bewegen möchte. Der Mischungspartner, der in der Flüssigkeit nicht gelöst ist, beharrt jedoch aufgrund seiner Massenträgheit an seinem Ort, und es kommt zu einer Relativbewegung zwischen der Flüssigkeit und dem Mischungspartner. Für diese Relativbewegung ist eine Energie erforderlich, die der Schwingung der Walze entzogen wird. Damit wird die Schwingung der Walze wirkungsvoll gedämpft.

Die WO 02/064886 A2 offenbart eine Walze, die mit nur einer elektrorheologischen oder magnetorheologischen Flüssigkeit gefüllt ist, wobei die Viskosität der Flüssigkeit über elektrische oder magnetische Felder einstellbar ist. In der DE 9301059 U1 ist ebenfalls nur eine in ihrer Viskosität einstellbare Flüssigkeit (in diesem Fall über die Temperatur) in einer Walze zu Dämpfungszwecken vorgesehen.

Der Erfindung liegt die Aufgabe zugrunde, das Schwingungsverhalten der Walze zu verbessern.

Diese Aufgabe wird bei einer Walze der eingangs genannten Art dadurch gelöst, daß die Flüssigkeit eine veränderbare Viskosität aufweist und eine Viskositätsveränderungseinrichtung vorgesehen ist, mit der die Viskosität veränderbar ist, wobei ein Schwingungssensor vorgesehen ist, der eine Schwingung der Walze erfaßt, wobei der Schwingungssensor mit der Viskositätsveränderungseinrichtung verbunden ist.

Man erreicht damit, daß man die Schwingungsdämpfung der Walze verändern kann. Eine dünnflüssigere Flüssigkeit hat gegenüber dem Mischungspartner einen anderen Reibungswiderstand und ein anderes Strömungsverhalten, das zu Verwirbelungen führen kann, als eine zähflüssigere Flüssigkeit. Durch Einstellen der Viskosität der Flüssigkeit kann man also darauf einwirken, wieviel Energie der Schwingung entzogen werden soll. Man hat auch erweiterte Möglichkeiten, gezielt auf bestimmte Schwingungsfrequenzen einzuwirken. Für die Dämpfung höherfrequenter Schwingungen benötigt man beispielsweise eine Flüssigkeit mit einer niedrigeren Viskosität. Für die Dämpfung einer niederfrequenten Schwingung benötigt man dann hingegen eine Flüssigkeit mit einer höheren Viskosität. Die Viskositätseinstellung der Flüssigkeit erweitert daher die Eingriffsmöglichkeiten bei der Schwingungsdämpfung. Man kann die Viskositätsveränderungseinrichtung und den Schwingungssensor in einen Regelkreis einbinden. Die Viskositätsveränderungseinrichtung wirkt dann so auf die Flüssigkeit ein, daß die Schwingung, die vom Schwingungssensor erfaßt wird, möglichst gezielt gedämpft wird. Der Schwingungssensor kann die Schwingung der Walze entweder direkt erfassen, wenn er beispielsweise an einer Achse, an einem Mantel

oder am Korpus der Walze angeordnet ist. Auch eine indirekte Schwingungserfassung ist möglich, wenn der Schwingungssensor an einem Lager oder einem Ständer der Walze angeordnet ist.

Vorzugsweise ist die Viskositätsveränderungseinrichtung im Betrieb der Walze betätigbar. Damit ist es möglich, während des Betriebs der Walze in die Schwingungsdämpfung der Walze einzugreifen. Dies ist insbesondere dann von Vorteil, wenn die Walze mit wechselnden Drehzahlen betrieben wird oder wenn die Walze beim Starten oder Bremsen einen gewissen Drehzahlbereich durchläuft, in dem bestimmte Schwingungsrisiken bestehen. Man kann dann gezielt auf Schwingungen in bestimmten Frequenzbereichen einwirken, um einen Betrieb mit vermindertem Schwingungsrisiko fahren zu können.

Vorzugsweise weist die Flüssigkeit eine elektrorheologische Eigenschaft auf, und die Viskositätsveränderungseinrichtung weist Mittel zum Erzeugen eines elektrischen Feldes auf. Eine Flüssigkeit mit einer elektrorheologischen Eigenschaft verändert ihre Viskosität in Abhängigkeit von einem elektrischen Feld. Wenn man das elektrische Feld verändert, dann verändert sich auch die Viskosität. Eine elektrorheologische Flüssigkeit kann beispielsweise durch ein Silikonöl gebildet sein, in dem Polyurethanpartikel dispergiert sind. Mit zunehmender elektrischen Spannung beziehungsweise Feld- stärke zeigt die elektrorheologische Flüssigkeit eine zunehmende Viskosität.

Alternativ oder zusätzlich kann die Flüssigkeit auch eine magnetorheologische Eigenschaft aufweisen, und die Viskositätsveränderungseinrichtung weist Mittel zum Erzeugen eines Magnetfelds auf. Eine derartige magnetorheologische Flüssigkeit wird auch als "Ferrofluid" bezeichnet. Ein Magnetfeld läßt sich auf elektrische Weise leicht erzeugen, beispielsweise mit Hilfe einer Spulenanordnung, die mit Strom beschickt wird. Wenn man den Strom verändert, verändert man auch die Stärke des Magnetfelds und damit die Viskosität der Flüssigkeit.

Die Flüssigkeit kann alternativ oder zusätzlich auch eine temperaturabhängige Viskosität aufweisen, und die Viskositätsveränderungseinrichtung weist dann Mittel zum Einstellen einer Temperatur auf. Über die Höhe der Temperatur wird dann die Viskosität der Flüssigkeit definiert. Vielfach führt eine höhere Temperatur zu einer niedrigeren Viskosität und umgekehrt. Für die Temperatureinstellung kann man bewährte Mittel verwenden, beispielsweise eine elektrische Widerstandsheizung oder eine induktive Heizung, bei der man in der Flüssigkeit oder in der Umgebung der Flüssigkeit Wirbelströme erzeugt.

Hierbei ist bevorzugt, daß der Hohlraum eine thermische Isolierung aufweist. Die Veränderung der Viskosität wirkt sich dann nicht oder nur mit einer geringeren Stärke auf die übrige Walze aus, was insbesondere dann von Vorteil ist, wenn die Walze zur Behandlung einer Faserstoffbahn, insbesondere einer Papier- oder Kartonbahn, eingesetzt wird. In diesem Fall kann man die Bahnbehandlung unabhängig von der Schwingungsdämpfung einstellen.

Schließlich ist es auch möglich, daß die Flüssigkeit eine druckabhängige Viskosität aufweist und die Viskositätsveränderungseinrichtung Mittel zum Einstellen eines Drucks im Hohlraum aufweist. Einige Flüssigkeiten ändern ihre Viskosität auch mit dem Druck, der in der Flüssigkeit herrscht. Wenn man diesen Druck verändert, verändert man auch die Viskosität.

Die Erfindung wird im folgenden anhand von bevorzugten Ausführungsbeispielen in Verbindung mit der Zeichnung beschrieben. Hierin zeigen:
- Fig. 1: eine schematische Darstellung einer Walzenanordnung,
- Fig. 2: eine schematische Darstellung einer ersten Ausführungsform einer Walze,
- Fig. 3: eine zweite Ausführungsform einer Walze in schematischer Darstellung,
- Fig. 4: eine dritte Ausführungsform einer Walze in schematischer Darstellung und
- Fig. 5: eine vierte Ausführungsform einer Walze in schematischer Darstellung.

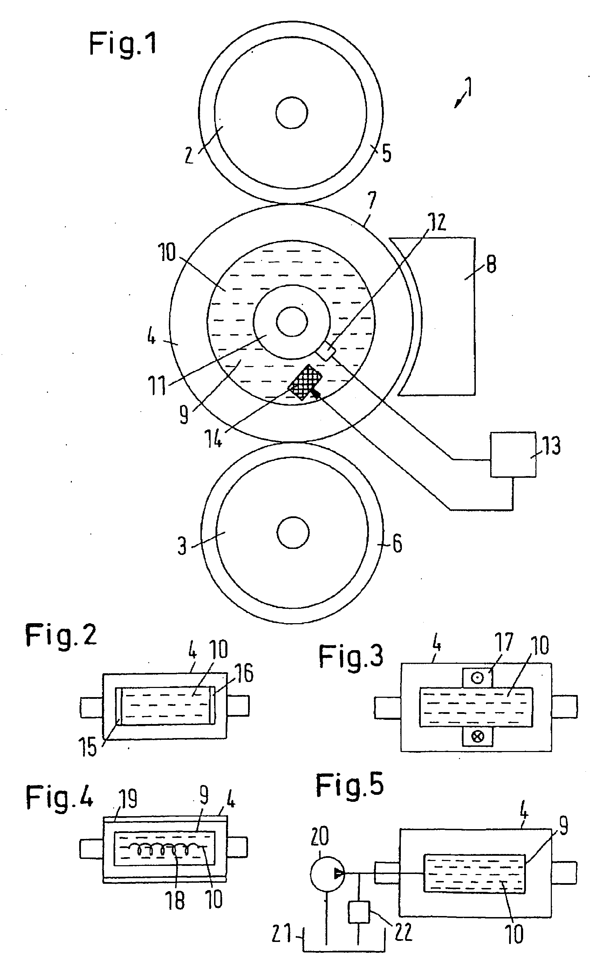

Fig. 1 zeigt eine Walzenanordnung 1 in Form eines Kalanders, der einen Walzenstapel mit einer oberen Endwalze 2, einer unteren Endwalze 3 und einer Mittelwalze 4 aufweist.

Die beiden Endwalzen 2, 3 sind jeweils als sogenannte "weiche Walzen" ausgebildet, d.h. sie weisen einen elastischen Belag 5, 6 an ihrem Umfang auf.

Die Mittelwalze 4 ist als harte Walze ausgebildet mit einer glatten Oberfläche 7. Die Mittelwalze 4 ist darüber hinaus als Heizwalze ausgebildet. Auf die Oberfläche 7 wirkt eine Heizeinrichtung 8, die im vorliegenden Fall als induktive Heizeinrichtung ausgebildet ist. Die Mittelwalze 4 kann aber auch auf andere Weise beheizt sein, beispielsweise durch eine Heizflüssigkeit oder einen Heizdampf, der durch nicht näher dargestellte periphere Bohrungen geleitet wird.

Schematisch dargestellt ist, daß die Mittelwalze 4 einen Hohlraum 9 aufweist, der mit einer Füllung 10 gefüllt ist. Natürlich ist der Hohlraum 9 geschlossen, also nicht stirnseitig offen.

Die Füllung 10 ist eine Mischung aus einer Flüssigkeit und mindestens einem in der Flüssigkeit nicht lösbaren Mischungspartner. Der Mischungspartner kann durch Feststoffpartikel gebildet sein. Auch eine zweite Flüssigkeit ist möglich, die zur besseren Unterscheidbarkeit als "flüssiges Fluid" bezeichnet wird. Der Mischungspartner kann auch durch mehrere unterschiedliche Stoffe gebildet sein, also Feststoffpartikel unterschiedlicher Art oder flüssige Fluide unterschiedlicher Art oder Feststoffpartikel und ein oder mehrere flüssige Fluide. Die Flüssigkeit weist eine veränderbare Viskosität auf. Die Möglichkeiten, wie man diese Viskosität verändern kann, werden weiter unten beschrieben.

Die Mittelwalze 4 weist einen Lagerzapfen 11 auf, an dem ein Schwingungssensor 12 angeordnet ist. Der Schwingungssensor 12 erfaßt Schwingungen der Mittelwalze 4. Der Schwingungssensor 12 kann auch an einer anderen Position angeordnet sein, beispielsweise an einer anderen Stelle der Mittelwalze 4, also an ihrem Korpus, oder an einem nicht näher dargestellten Lager der Mittelwalze 4.

Der Schwingungssensor 12 ist mit einer Regeleinrichtung 13 verbunden, die hier aus Gründen der Übersicht außerhalb der Walze dargestellt ist. Die Regeleinrichtung 13 kann aber auch in die Mittelwalze 4 integriert sein. Die Regeleinrichtung 13 ist verbunden mit einer Viskositätsveränderungseinrichtung 14, die auf die Füllung 10 im Hohlraum 9 der Mittelwalze 4 einwirkt. Mit Hilfe der Viskositätsveränderungseinrichtung 14 ist es also möglich, die Viskosität der Flüssigkeit der Füllung 10 zu verändern.

Wenn nun Schwingungen an der Mittelwalze 4 auftreten, dann übertragen sich diese Schwingungen auch auf die Füllung 10, wobei nicht einmal vorausgesetzt wird, daß die Füllung 10 sich mit der Mittelwalze 4 mitdreht, wenngelich dies in der Regel erfolgt. Die Flüssigkeit der Füllung 10 regt auch den Mischungspartner zu Schwingungen an. Da zwischen der Flüssigkeit und dem Mischungspartner aber keine starre Kopplung herrscht, kommt es zwischen der Flüssigkeit und dem Mischungspartner zu Relativbewegungen. Dabei entstehen einerseits Reibungsverluste, andererseits aber auch Verwirbelungen. Beides führt zu einem Energieverbrauch, genauer gesagt, zu einer Umsetzung von Schwingungsenergie in Wärme. Die in Wärme umgesetzte Energie wird der Schwingung der Walze entzogen, so daß die Schwingung der Walze gedämpft wird.

Das Dämpfungsverhalten ist nun unter anderem von der Viskosität der Flüssigkeit der Füllung 10 abhängig. Wenn man auf die Viskosität Einfluß nehmen kann, beispielsweise durch die Viskositätsveränderungseinrichtung 14, dann kann man auch das Dämpfungsverhalten der Mittelwalze 4 verändern.

Die Fig. 2 bis 5 zeigen nun verschiedene Möglichkeiten, wie man die Viskositätsveränderungseinrichtung 14 ausgestalten kann. Vorausgesetzt wird dabei natürlich, daß die Flüssigkeit der Füllung 10 durch die Viskositätsveränderungseinrichtung 14 in ihrer Viskosität verändert werden kann. Die einzelnen Möglichkeiten sind auch miteinander kombinierbar.

Fig. 2 zeigt die Mittelwalze 4 mit der Füllung 10 und Elektroden 15, 16, die mit einer nicht näher dargestellten Spannungserzeugungseinrichtung verbunden sind. Zwischen den beiden Elektroden 15, 16 entsteht dann ein elektrisches Feld. Die Füllung 10 weist eine elektrorheologische Flüssigkeit auf, die ihre Viskosität in Abhängigkeit von einem anliegenden elektrischen Feld verändert. Durch eine Veränderung des Feldes zwischen den Elektroden 15, 16 läßt sich also die Viskosität der Flüssigkeit der Füllung 10 verändern.

Fig. 3 zeigt eine Mittelwalze 4, die eine Magnetfelderzeugungseinrichtung 17 in Form einer Spule aufweist, die mit einem Strom beaufschlagt werden kann. Bei einem Stromfluß, der, wie dargestellt, in Umfangsrichtung der Mittelwalze 4 gerichtet ist, entsteht ein Magnetfeld, das jedenfalls in der Mitte der Magnetfelderzeugungseinrichtung 17 etwa axial zur Mittelwalze 4 gerichtet ist. Durch eine entsprechende Anordnung der Magnetfelderzeugungseinrichtung 17, beispielsweise in Form einer Helmholtz-Spule, läßt sich das Magnetfeld auch über einen größeren Bereich homogen gestalten. Dies ist aber keine Voraussetzung für die Funktion der Mittelwalze 4.

Die Füllung 10 weist eine magnetorheologische Flüssigkeit auf, die auch als "Ferrofluid" bezeichnet werden kann. Die Flüssigkeit ändert ihre Viskosität in Abhängigkeit vom Magnetfeld. Durch eine Änderung des Stroms durch die Magnetfelderzeugungseinrichtung kann man also die Viskosität der Flüssigkeit der Füllung 10 verändern.

Fig. 4 zeigt eine Mittelwalze 4 mit einer Heizeinrichtung 18, die auf die Füllung 10 und damit die Flüssigkeit der Füllung 10 einwirkt. In Abhängigkeit von der Temperatur der Füllung 10, die mit Hilfe der Heizeinrichtung 18 eingestellt werden kann, ändert sich die Viskosität der Flüssigkeit der Füllung 10. Ein derartiges Verhalten läßt sich beispielsweise bei einem Öl beobachten.

Die Mittelwalze 4 kann in diesem Fall eine thermische Isolierung oder Abschirmung 19 aufweisen, damit die Temperatur der Oberfläche der Mittelwalze 4 nicht von der Temperatur der Füllung 10 zu stark beeinflußt wird. Die Temperatur der Füllung 10 sollte ausschließlich auf das Dämpfungsverhalten hin ausgerichtet sein.

Fig. 5 zeigt eine Mittelwalze 4, bei der eine Möglichkeit vorgesehen ist, um den Druck im Hohlraum 9, der auf die Füllung 10 einwirkt, zu verändern. Eine Druckerzeugungseinrichtung 20, beispielsweise in Form einer Pumpe, entnimmt Füllung aus einem Behälter 21 und pumpt sie bei Bedarf in den Hohlraum 9, um den Druck zu erhöhen. Um den Druck zu verringern, ist ein Ablaßventil 22 vorgesehen, das Füllung 10 wieder in den Behälter 21 entweichen läßt.

In allen Fällen ist es nun möglich, die Schwingungen der Mittelwalze 4 durch den Schwingungssensor 12 zu ermitteln und an die Regeleinrichtung 13 weiterzuleiten. Die Regeleinrichtung 13 stellt dann über die Viskositätsveränderungseinrichtung 14 die Viskosität der Flüssigkeit der Füllung 10 so ein, daß die Schwingung optimal gedämpft wird. Die Veränderung der Viskosität der Flüssigkeit der Füllung 10 kann also im Betrieb der Mittelwalze 4 erfolgen.

Die Walze 4 muß nicht, wie dargestellt, in einem Kalander eingesetzt sein. Eine entsprechende Dämpfung über eine Füllung, die eine Flüssigkeit und einen in der Flüssigkeit nicht gelösten Mischungspartner aufweist, wobei die Viskosität der Flüssigkeit veränderbar ist, läßt sich auch an anderer Stelle verwenden, beispielsweise in einer Rollenwickeleinrichtung, bei der die Walze als Stütz- oder Tragwalze eingesetzt ist. Auch in einer Presse kann es vorteilhaft sein, eine derartig gedämpfte Walze einzusetzen. Auch schnelldrehende Leitwalzen, die zum Führen einer Bahn verwendet werden, können auf diese Weise schwingungsgedämpft werden.

## Patentansprüche

1. Walze, insbesondere Bahnbehandlungs-, Leit-, Kontakt- oder Stützwalze, mit einem im Betrieb rotierenden Korpus, der mindestens einen Hohlraum aufweist, der zumindest teilweise mit einer Mischung aus einer Flüssigkeit und mindestens einem in der Flüssigkeit nicht lösbaren Mischungspartner gefüllt ist, der durch Feststoffpartikel oder ein flüssiges Fluid oder durch Feststoffpartikel und mindestens ein flüssiges Fluid gebildet ist, **dadurch gekennzeichnet, dass** die Flüssigkeit eine veränderbare Viskosität aufweist und eine Viskositätsveränderungseinrichtung (14) vorgesehen ist, mit der die Viskosität veränderbar ist, wobei ein Schwingungssensor (12) vorgesehen ist, der eine Schwingung der Walze (4) erfasst, wobei der Schwingungssensor (12) mit der Viskositätsveränderungseinrichtung (14) verbunden ist.

2. Walze nach Anspruch 1, **dadurch gekennzeichnet, dass** die Viskositätsveränderungseinrichtung (14) im Betrieb der Walze (4) betätigbar ist.

3. Walze nach Anspruch 1 oder 2, **dadurch gekennzeichnet, dass** die Flüssigkeit eine elektrorheologische Eigenschaft aufweist und die Viskositätsveränderungseinrichtung (14) Mittel (15, 16) zum Erzeugen eines elektrischen Feldes aufweist.

4. Walze nach einem der Ansprüche 1 bis 3, **dadurch gekennzeichnet, dass** die Flüssigkeit eine magnetorheologische Eigenschaft aufweist und die Viskositätsveränderungseinrichtung (14) Mittel (17) zum Erzeugen eines Magnetfelds aufweist.

5. Walze nach einem der Ansprüche 1 bis 4, **dadurch gekennzeichnet, dass** die Flüssigkeit eine temperaturabhängige Viskosität aufweist und die Viskositätsveränderungseinrichtung (14) Mittel (18) zum Einstellen einer Temperatur aufweist.

6. Walze nach Anspruch 5, **dadurch gekennzeichnet, dass** der Hohlraum (9) eine thermische Isolierung aufweist.

7. Walze nach einem der Ansprüche 1 bis 6, **dadurch gekennzeichnet, dass** die Flüssigkeit eine druckabhängige Viskosität aufweist und die Viskositätsveränderungseinrichtung (14) Mittel (20, 22) zum Einstellen eines Drucks im Hohlraum (9) aufweist.

## Claims

1. Roll, in particular a web treatment, guide, contact or supporting roll, having a body that rotates during operation and has at least one cavity, which is at least partly filled with a mixture of a liquid and at least one mixture partner that is not soluble in the liquid and is formed by solid particles or a liquid fluid or by solid particles and at least one liquid fluid,
**characterized in that**
the liquid has a variable viscosity and a viscosity changing device (14) is provided, with which the viscosity can be varied, a vibration sensor (12) being provided, which registers a vibration of the roll (4), the vibration sensor (12) being connected to the viscosity changing device (14).

2. Roll according to Claim 1,
**characterized in that**
the viscosity changing device (14) can be actuated during operation of the roll (4).

3. Roll according to Claim 1 or 2,
**characterized in that**
the liquid has an electrorheological property and the viscosity changing device (14) has means (15, 16) for generating an electric field.

4. Roll according to one of Claims 1 to 3,
**characterized in that**
the liquid has a magnetorheological property and the viscosity changing device (14) has means (17) for generating a magnetic field.

5. Roll according to one of Claims 1 to 4,
**characterized in that**
the liquid has a temperature-dependent viscosity and the viscosity changing device (14) has means (18) for setting a temperature.

6. Roll according to Claim 5,
**characterized in that**
the cavity (9) has thermal insulation.

7. Roll according to one of Claims 1 to 6,
**characterized in that**
the liquid has a pressure-dependent viscosity and the viscosity changing device (14) has means (20, 22) for setting a pressure in the cavity (9).

## Revendications

1. Rouleau, en particulier rouleau de traitement de bande, de guidage, de contact ou de support, comprenant un corps en rotation pendant le fonctionnement, qui présente au moins une cavité qui est remplie au moins en partie d'un mélange constitué d'un liquide et d'au moins un partenaire de mélange non soluble dans le liquide, qui est formé par des particules solides ou un fluide coulant ou par des particules solides et au moins un fluide coulant, **caractérisé en ce que** le liquide présente une viscosité variable et un dispositif de modification de la viscosité (14) est prévu, avec lequel la viscosité peut être modifiée, un capteur d'oscillations (12) étant prévu, lequel détecte une oscillation du rouleau (4), le capteur d'oscillations (12) étant connecté au dispositif de modification de la viscosité (14).

2. Rouleau selon la revendication 1, **caractérisé en ce que** le dispositif de modification de la viscosité (14) peut être actionné pendant le fonctionnement du rouleau (4).

3. Rouleau selon la revendication 1 ou 2, **caractérisé en ce que** le liquide présente une propriété électrorhéologique et le dispositif de modification de la viscosité (14) présente des moyens (15, 16) pour produire un champ électrique.

4. Rouleau selon l'une quelconque des revendications 1 à 3, **caractérisé en ce que** le liquide présente une propriété magnétorhéologique et le dispositif de modification de la viscosité (14) présente des moyens (17) pour produire un champ magnétique.

5. Rouleau selon l'une quelconque des revendications 1 à 4, **caractérisé en ce que** le liquide présente une viscosité dépendant de la température et le dispositif de modification de la viscosité (14) présente des moyens (18) pour ajuster une température.

6. Rouleau selon la revendication 5, **caractérisé en ce que** la cavité (9) présente une isolation thermique.

7. Rouleau selon l'une quelconque des revendications 1 à 6, **caractérisé en ce que** le liquide présente une viscosité dépendant de la pression et le dispositif de modification de la viscosité (14) présente des moyens (20, 22) pour ajuster une pression dans la cavité (9).
